# EUROPEAN PATENT SPECIFICATION

(11) **EP 2 835 842 B1**
(45) Date of publication and mention of the grant of the patent: **26.06.2019**
(21) Application number: 14179799.3
(22) Date of filing: 05.08.2014
(51) Int. Cl.: H01M 2/14, H01M 10/625, H01M 10/647, H01M 10/656, H01M 2/10, H01M 10/6557, H01M 10/613

(54) **Battery module**
Batteriemodul
Module de batterie

(30) Priority: 05.08.2013 US 201361862202 P; 10.07.2014 US 201414328445
(43) Date of publication of application: 11.02.2015
(73) Proprietor: Samsung SDI Co., Ltd., Yongin-si, Gyeonggi-do (KR)
(72) Inventor: Lee, Jang Wook, Yongin-si (KR); Im, Jangyeong, Yongin-si (KR)
(74) Representative: Gulde & Partner

(56) References cited:
- DE-A1-102011 104 499
- US-A1- 2011 064 993

## Description

### BACKGROUND

### Field

The present invention relates to a barrier for a battery module and a battery module comprising a barrier.

### Description of the Related Art

A high-power battery module using a non-aqueous electrolyte with high energy density has recently been developed. The high-power battery module is configured as a large-capacity battery module manufactured by connecting a plurality of battery cells in series and/or parallel to each other so as to be used for driving devices, e.g., motors of electric vehicles and the like, which require high power. Barriers for battery modules and battery modules comprising a barrier are disclosed e.g. in DE 10 2011 104 499 A1 and US 2011/064993 A1.

An electrochemical reaction occurs inside the battery cell, and heat is generated by the reaction. The heat generated as described above degrades the battery cell and deteriorates characteristics including the capacity of the battery cell, etc. Particularly, in a high-capacity battery cell, the generated heat is further increased. In this case, a serious problem occurs in a battery module configured with a set of the battery cells, and therefore, the safety of the battery module is problematic.

### SUMMARY

Thus, it is an object of the invention to provide a barrier for a battery module and a battery module with a barrier that facilitates an improved heat exchange efficiency.

This object is achieved for the barrier mentioned in the beginning in that the barrier is a barrier according to claim 1 and in particular a barrier for separating two adjacent battery cells of a battery module from each other, the barrier comprising a separation plate, at least one side plate and a base plate, the side plate and the base plate being based on adjacent edges of the separation plate, thereby defining a tray for receiving a battery cell, wherein the barrier comprises a spacing element that protrudes from the base plate into the tray, wherein the spacing element protrudes from the base plate in a direction perpendicular to the base plate and in that the side plate is formed with an opening, wherein a height of the spacing element in the direction perpendicular to the base plate is greater than a distance between the opening and the base plate.

For the battery module mentioned in the beginning, the object is achieved according to the invention in that the battery module is a battery module according to claim 14 and in particular a battery module battery module with a plurality of battery cells arranged one behind the other in a stacking direction, the battery module comprising a barrier that is positioned between two adjacent battery cells of the plurality of battery cells, wherein the barrier is a barrier according to the invention.

This inventive solution provides that a heat accumulation at the battery cells is prevented, as the spacing element positions one of the battery cells at a distance from the base plate. Thus, the heat can be released from the battery cell to a cooling medium, e.g. air, that is present in the space between the battery cell and the base plate. The tray provides for a receiving volume, in which the battery cell can at least sectionwise or even completely be arranged and held.

The solutions according to the invention can be combined as desired and further improved by the following embodiments that are advantageous on their own, in each case.

According to the invention, the spacing element protrudes from the base plate in a direction perpendicular to the base plate. The further the spacing element protrudes from the base plate, the greater the distance between the battery cell and the base plate and the greater the space for the cooling medium.

The spacing element may have a quadrangular shape. A groove may extend into the spacing element. In case a cooling medium flows along the spacing element, the groove causes turbulences, which improve heat transfer from the battery cell to the cooling medium. The grooe may be formed as a hole and in particular as a blind hole in the spacing element, that extends into the spacing element perpendicular to the and opens away from the separation plate. An opening of the groove may have polygonal and in particular a rectangular, a square or a trapezoidal shape.

The separation plate has an inner side that faces towards or into, and an outer side that faces away from the tray of the barrier, wherein the inner and the outer sides may have different shapes.

The spacing element preferably extends beyond a side of the separation plate opposite of the tray, wherein a guidance plate is provided that extends parallel to and abuts the side plate and the spacing element, the part or section of the spacing element that extends beyond the side of the separation plate opposite of the tray and the guidance plate surmounting the spacing element away from the base plate. When arranging two barriers after each other and one of the battery cells between the barriers, the guidance plate facilitate an easy and accurate positioning of the barriers with respect to each other and the guidance plate improves guidance of the cooling medium.

The side plate is formed with an opening, wherein a height of the spacing element in the direction perpendicular to the base plate is greater than a distance between the opening and the base plate. Hence, in case the cooling medium shall flow between the base plate and the battery cell, the cooling medium can be conducted via the opening and along the spacing member and in particular along the opening of its groove, thereby causing the turbulent cooling medium stream. The distance between the base plate and the opening is preferably the minimum distance between the base plate and the opening, hence the distance between the base plate and an edge of the opening that is closest to the base plate.

The side plate can comprise a first and a second section, the first section extending further from the separation plate than the second section, wherein the first section is arranged between the second section and the base plate. Hence, the material necessary for the side plate and therefore the weight of the barrier is reduced, thereby improving the energy to weight ratio of the battery module. The side plate may be formed as a step, wherein the second section is formed as a set back with respect to the first section. The second section allows the cooling medium to freely reach the battery cell. The opening may be arranged in the first section, which is closer to the base plate and hence to the spacing element than the second section. Via the opening, the cooling medium can be directed into the space between the battery cell and the base plate, assuring that the cooling medium flows along the base plate and cools a section of the battery cell that is closest to the base plate. The first section may be a section of a side wall of the tray, whose width perpendicular to the separation plate is comparable or equal to or greater than a thickness at the battery when cell arranged in the tray, thereby stably holding and protecting the battery cell.

The side plate is formed with an inner side that faces the tray, i.e. a receiving volume for the battery cell formed by the separator, and an outer side that faces away from the tray, wherein at least one spacing rib can be arranged on the inner side and / or on the outer side. The spacing rib prevents that the battery cell is in extensive contact with the side plate and/or that the side plate is in extensive contact with a housing of the battery module. Hence, the cooling medium can be present and flow through a space between the battery cell and the side plate and/or between the side plate and the housing. Furthermore, the rib may direct the cooling medium and provides for a steady contact between the barrier and the battery cell and/or the housing. Moreover, an accumulation of condensed humidity may flow off due to the space provided by the spacing rib.

The barrier may be provided with two side plates and two spacing elements, wherein the side plates are arranged at opposite edges of the separation plate and each of the spacing elements is arranged adjacent to one of the side plates. The two side plates allow that the battery cell can be safely held by the barrier. By arranging each of the two spacing elements adjacent to one of the side plates, a distance remains between the spacing elements, thereby facilitating that the battery cell can stably stand on the spacing elements. Furthermore, a free space between the spacing elements and between the base plate and the battery cell can have a maximum possible size, allowing for an easy flow of the cooling medium through the space between the battery cell and the base plate.

The separation plate may comprise an edge section that abuts the base plate, the edge section comprising enforcement ribs. Some of the enforcement ribs may extend in parallel to and other of the enforcement ribs may extend perpendicular to the base plate and brace the separation plate and may furthermore support the battery cell. In case the spacing element protrudes further from the separation plate than the enforcement ribs, the space between the battery cell and the base plate is not unduly reduced in size by the enforcement ribs. Moreover, the enforcement ribs may cause turbulences in the cooling medium stream, which further improved transfer of heat from the battery cell to the cooling medium.

In particular, if the enforcement ribs form at least one compartment or more compartments, the turbulences may be crated or maintained between the spacing elements. The compartments may be arranged between the spacing elements, in particular in a row or in several rows and one behind the other.

The compartments may have a polygonal and in particular a rectangular, a square or a trapezoidal form. In case the form is trapezoidal, a thickness of the enforcement ribs that extend perpendicular to the base plate may gradually decrease away from the base plate.

At least one guidance rib can protrude from the base plate into the tray. The guidance rib influences the stream of the cooling medium such that it flows in a desired direction or pattern. In particular, the guidance rib may extent parallel to the separation plate, such that the cooling medium is directed along the battery cell and in particular from one of the side plates to the other one. The guidance rib may have rounded corners or edges to avoid unintended turbulences of the cooling medium stream. A height of the guidance rib may correspond to a thickness of one of the enforcement ribs that extends parallel to the base plate.

The barrier may comprise a fastening member that is adapted to captively fix the barrier to another barrier by a force fit. Hence, at least two barriers can be affixed to each other, facilitating an easy assembly of the battery module.

The fastening member preferably comprises a fastening receptacle and a fastening protrusion, wherein the fastening receptacle opens against and the fastening protrusion extends in a mounting direction, in which the barrier can be mounted to another barrier, the fastening receptacle being adapted to at least sectionwise receive the fastening protrusion of the other barrier in a force fit manner. The mounting direction preferably extends perpendicular to the separation plate, such that the barriers and the battery cells can alternately be assembled in the mounting direction, thereby providing an easy way for assembling the battery module.

End plats of the battery module, between which the at least one barrier of all barriers of the battery module and the battery cells are arranged, may comprise at least one fastening members, that can be coupled to the respective nearest barrier and in particular to its fastening member in a force fit manner.

The barrier may comprise at least one retaining lug that protrudes from an edge of and perpendicular to the separation plate, the edge being opposite of the base plate. The battery cell can be placed between and held by the base plate and the retaining lugs, thereby preventing that the battery cell falls out of the tray in case to battery unit is positioned upside-down.

In an assembled state of the battery module, the battery cell can be arranged in the tray and rest against the two spacing elements, wherein three heat exchange paths may be defined between the battery cell and the barrier. The three heat exchange paths can respectively be interconnected in the area of one of the spacing elements. The three interconnected heat exchange paths together may have a U-shape and facilitate a cooling medium stream that extends along three sides of the battery cell. The three sides are for instance three of the four sides of the battery cell that are parallel to the stacking direction, for example a bottom side and two lateral sides, between which the bottom side extends. These sides cannot sufficiently be cooled with known barriers. The flow direction of the cooling medium may change in transition areas in which the heat exchange paths contact each other. Each of the spacing elements, preferably provided with the groove, may be arranged in one of the transition areas. Due to the turbulence cause by the spacing elements and in particular by their groove, the cooling medium can be kept in close contact with the battery cell even in the transition areas, improving cooling of edges of the battery cell placed in or near the transition areas.

### BRIEF DESCRIPTION OF THE DRAWINGS

FIG. 1 is a perspective view showing a battery module according to an embodiment of the present invention.
FIG. 2 is a perspective view of a battery cell and barriers, shown in FIG. 1.
FIG. 3A is a view showing one surface of the barrier of FIG. 2.
FIG. 3B is a view showing the other surface of the barrier of FIG. 2.
FIG. 4 is a view schematically showing a front side of the barriers having the battery cell interposed therebetween.
FIG. 5 is a perspective view of a barrier according to another embodiment of the present invention.
FIG. 6 is a perspective view of a barrier according to still another embodiment of the present invention.

### DETAILED DESCRIPTION

In the following detailed description, exemplary embodiments of the present invention are described with reference to the figures. Hereinafter, like reference numerals refer to like elements.

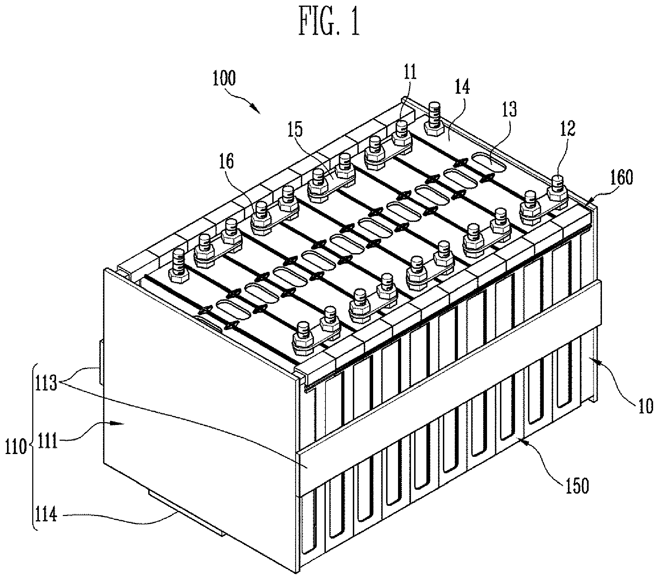

FIG. 1 is a perspective view showing a battery module according to an embodiment of the present invention.

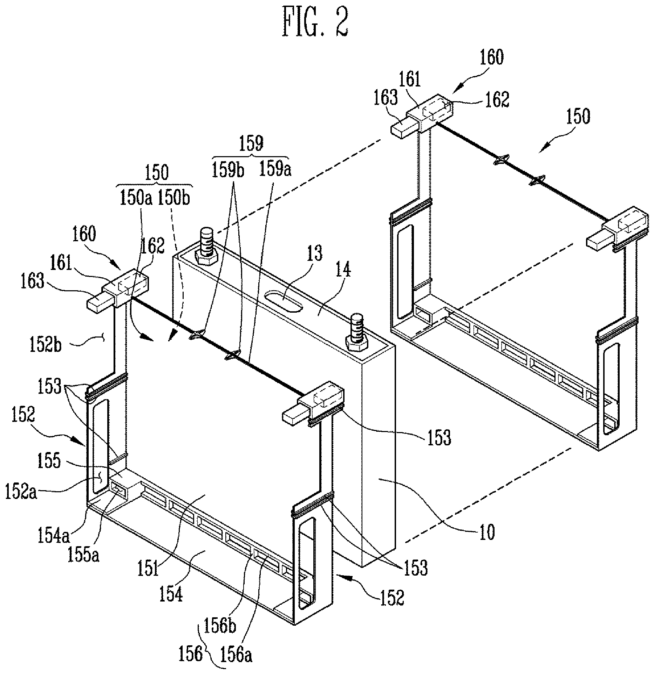

Referring to FIG. 1, the battery module 100 according to this embodiment includes a plurality of battery cells 10 aligned in one direction one after the other in, e.g. a stacking direction; barriers 150 respectively interposed between the plurality of battery cells 10; and a housing 110 configured to accommodate the battery cells 10 and the barriers 150 therein. The barrier 150 may include one or more fastening members 160 configured to allow the barrier 150 to be coupled to an adjacent barrier 150 thereby, and one or more spacing elements 155 (see FIG. 2) configured to form a flow path of a heat exchange medium beneath the battery cell 10.

The plurality of battery cells 10 may be aligned in the one direction so that wide surfaces of the battery cells 10 face each other. The battery cell 10 may be manufactured by accommodating an electrode assembly and an electrolyte in a battery case and then sealing the battery case with a cap assembly 14. The cap assembly 14 may include a positive electrode terminal 11, a negative electrode terminal 12 and a vent portion 13. The electrode assembly is electrically connected to the positive and negative electrode terminals 11 and 12, and the positive and negative electrode terminals 11 and 12 become passages through which energy generated by an electrochemical reaction between the electrode assembly and the electrolyte is transferred. In addition, gas may be generated inside the battery cell 10 due to a side reaction of the electrochemical reaction. In this case, the vent portion 13 acts as a passage through which the gas generated inside the battery cell 10 can be exhausted to the outside of the battery cell 10.

The positive and negative electrode terminals of two battery cells 10 adjacent to each other may be electrically connected to each other by a bus-bar 15. The bus-bar 15 is provided with holes through which the positive and negative electrode terminals 11 and 12 can pass, respectively. The bus-bar 15 connected to the positive and negative electrode terminals 11 and 12 passing through the respective holes thereof may be fixed by a nut 16 or the like.

The hosing 110 fixes together the plurality of battery cells 10 and the barriers 150 respectively interposed between the battery cells 10, and the plurality of battery cells 10 may act as one power source. The housing 110 may include a pair of end plates 111 disposed to face wide surfaces of the outermost battery cells 10, and connection members 113 and 114 configured to connect the end plates 111 to each other. The connection members 113 and 114 may be provided to support bottom and side surfaces of the battery cell 10.

FIG. 2 is a perspective view of a battery cell and barriers, shown in FIG. 1.

Referring to FIG. 2, the barrier 150 may include a separation plate 151 disposed in parallel to a wide surface of the battery cell 10, a base plate 152 and a side plate 154 and a retainer 159 that comprises a retainer 159 with at least one retaining lug 159a, b provided to face side surfaces of the battery cell 10 at each edge of the separation plate 151. The barrier 150 forms a tray for one of the battery cells 10. The barrier 150 includes one surface 150a that may be designated as an inner surface that is configured to face into the tray and towards any one of battery cells 10 arranged in the tray, and the other, e.g. outer surface 150b configured to face away from the tray and e. g. towards another one of the adjacent battery cells 10. In this case, the one surface 150a and the other surface 150b may be formed in different shapes. For example, the battery cell 10 is interposed between adjacent barriers 150. Here, the one surface 150a of the barrier 150 facing a front surface of the battery cell 10 and the other surface 150b of the barrier 150 facing a rear surface of the battery cell 10 are formed in different shapes. In this case, the one surface 150a and the other surface 150b of the barrier 150 may be formed in shapes that may at least partly be complementary and can be engaged with each other.

The barrier 150 may be provided with the fastening member 160 via which the barrier 150 can be fastened to an adjacent barrier 150. The fastening member 160 may include a body portion 161 that is arranged in the corner of the separation plate 151, a fastening protrusion 163 provided at one end of the body portion 161 to protrude outward, hence, perpendicular to the separation plate 151 and away from the body portion 161, and a fastening receptacle 162 provided at the other end of the body portion 161 to be concave inward, hence, to open away from the separation plate 151. The barriers 150 adjacent to each other with the battery cell 10 interposed therebetween may be fastened and fixed by the fastening members 160 by a force fit. In this case, the fastening protrusion 163 provided to any one of the adjacent barriers 150 is inserted into the fastening receptacle 162 of the other barrier 150 so that the adjacent barriers 150 are fastened to each other, in particular in a force fitting manner.

For example, the fastening receptacle 162 may be formed in a shape corresponding to, i.e. complementary to the fastening protrusion 163. After the fastening protrusion 163 is inserted into the fastening receptacle 162, the body portions 161 of the fastening members 160 provided to the adjacent barriers 150 are aligned with each other, so that one end of the body portion 161 of any one of the adjacent barriers 150 can be engaged with the other end of the body portion 161 of the other of the adjacent barriers 150. That is, in a case where the barriers 150 are not aligned with each other, the body portions 161 of the fastening members 160 are disposed to cross each other, and the coupling between the fastening receptacle 162 and the fastening protrusion 163 of the adjacent barriers 150 may be problematic. This may become an index for identifying whether the positions of the adjacent barriers 150 are correctly aligned. That is, the fastening member 160 of the barrier 150 may fix an adjacent barrier 150 by being fastened to that of the adjacent barrier 150 and simultaneously guide the position of the adjacent barrier 150.

The barrier 150 may include the separation plate 151 configured to correspond to a wide surface of the battery cell 10, and side and base plates 152,154 and at least one retainer 159 connected to the separation plate 151 at edges or corners of the separation plate 151. The separation plate 151 is formed in a shape corresponding to the wide surface of the battery cell 10. In this case, the separation plate 151 may be formed larger than the wide surface of the battery cell 10. Although not shown in this figure, one or more projections that allow the wide surface of the battery cell 10 and the separation plate 151 to be spaced apart from each other may be provided to the separation plate 151. Two side flange portions 152 may respectively be provided at both side portions or opposite edges of the separation plate 151. The base plate 154 is arranged at a bottom edge of the separation plate 151, and the retainer 159 is provided at a top edge opposite to the bottom edge of the separation plate 151. The side and base plates 152, 154 may be formed as quadrangular flat plates.

The retainer 159 may be arranged to be placed on the cap plate 14 of the battery cell 10. In this case, the retainer 159 is preferably formed not to block the vent portion 13 formed in the cap plate 14. For example, the retainer 159 may include the retaining lug 159a that protrudes from the separation plate 151 in the stacking direction and e.g. along the longitudinal direction of the battery cell 10, and a retaining rib 159b protruding from the rod-shaped member 159a, e.g. away from the tray. The protruding lug 159a may be formed corresponding or complementary to the shape of the vent portion 13 so that it at least sectionwise surrounds and therefore exposes the vent portion 13.

The side plate 152 may be provided with one or more openings 152a and 152b through which the heat exchange medium can flow into the tray of the barrier 150 or flow out of the tray of the barrier 150. The heat exchange medium is provided to perform a heat exchange with the battery cell 10. The heat exchange medium may flow in the barrier 150 through the openings 152a and 152b to perform the heat exchange with the battery cell 10 and then flow out of the barrier 150 through the openings 152a and 152b. The openings 152a and 152b may include an upper opening 152b provided at an upper portion or second section of the side plate 152, and a lower opening 152a provided at a lower portion or first section of the side plate 152.

The upper opening 152b may be provided to have an area as wide as possible so that the heat exchange medium can smoothly flow in the barrier 150 or flow out of the barrier 150 therethrough. For example, the upper opening 152b may be formed in a shape where the other portions of the upper portion of the side flange portion 152, except a portion attached to the separation plate 151, are all open. On the other hand, the lower opening 152a may be provided to have a size smaller than that of the upper opening 152b. The lower opening 152b acts as a passage through which the heat exchange medium flows into the barrier 150. In this case, the lower opening 152a may act as a connection passage through which the heat exchange medium is transferred to a lower portion of the battery cell 10. Therefore, the lower opening 152a may be provided to have a size smaller than that of the upper opening 152b so that the heat exchange medium flowing in the barrier 150 is not discharged through the lower opening 152a but transferred to the lower portion of the battery cell 10. The lower opening 152a may be formed in the shape of a hole extending through the side plate 152.

The side plate 152 may be provided with one or more spacing ribs 153 protruding from the surface of the side plate 152. The spacing ribs 153 may be provided to protrude from the surface of the side plate 152. For example, the spacing ribs 153 may be provided at inner and outer sides or surfaces of the side plate 152, the inner side facong into and the outer side facing away from the tray. The spacing rib 153 provided at the inner side of the side plate 152 provides a flow path for the heat exchange medium by allowing the battery cell 10 and the side plate 152 to be spaced apart from each other. The spacing rib 153 provided at the outer side of the side plate 152 promotes the flow of the heat exchange medium inside the battery module by allowing the side plate 152 and the housing 110 (see FIG. 1) to be spaced apart from each other.

The spacing rib 153 may be provided between the lower and upper openings 152a and 152b. Thus, the side rib 153 can reinforce the mechanical strength of the side plate 152, which may be lowered by the lower and upper openings 152a and 152b. The spacing rib 153 may be provided to extend perpendicular to the separation plate 151, e.g. to correspond to the lateral direction of the side plate 152. A plurality of spacing ribs 153 may be provided and may extend in parallel with one another.

The spacing elements 155 configured to support the bottom surface of the battery cell 10 may be provided at a lower portion of the barrier 150. Preferably, the spacing elements 155 are respectively provided at opposite ends or corners of the separation plate 151 so as to allow the bottom surface of the battery cell 10 and the base plate 154 to be spaced apart from each other. For example, the spacing element 155 provides a flow path for the heat exchange medium that flows into the barrier 150 through the openings 152a and 152b of one of the side plates 152, thereby improving the cooling efficiency of the bottom surface of the battery cell 10.

The battery module includes a plurality of battery cells 10, and the battery cell 10 generates heat by being charged or discharged. The heat accelerates degradation of the battery cell 10. In a serious case, the heat causes a problem in the safety of the battery cell 10. Therefore, it is necessary to control the heat. In this case, the openings 152a and 152b provided to the side plates 152 of the barrier 150 according to this embodiment may act as passages through which the heat exchange medium is conducted in the barrier 150 or conducted out of the barrier 150 in order to exchange heat with the battery cell 10. The barrier 150 according to this embodiment is provided with the spacing element 155 so that the flow path of the heat exchange medium can also be provided beneath the bottom surface of the battery cell 10, thereby further improving the heat exchange efficiency. Further, the barrier 150 according to this embodiment is provided with the fastening member 160 through which the barrier 150 is fixed to an adjacent barrier 150. It is possible to constantly maintain a space between the barriers 150 for the battery cell 10. Thus, it is possible to efficiently provide a cooling path through which the heat exchange medium flows. Accordingly, it is possible to effectively control the temperature of the battery cell 10, thereby extending the lifespan of the battery module 100.

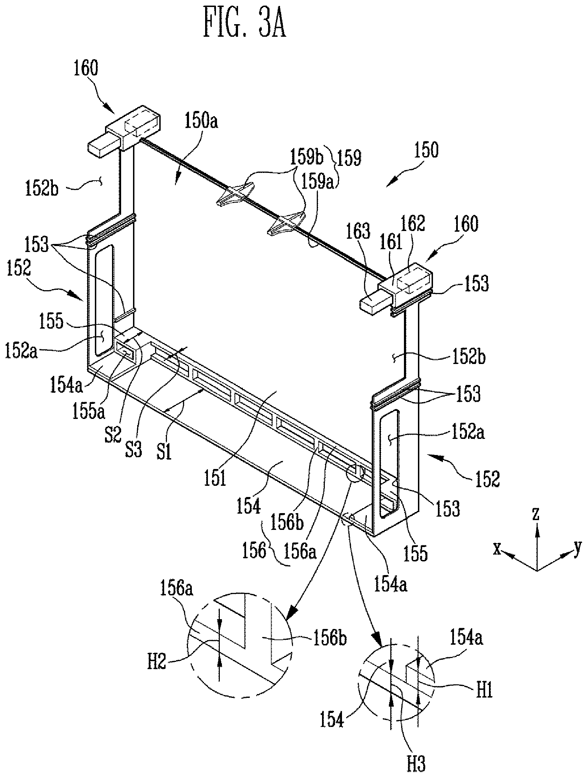

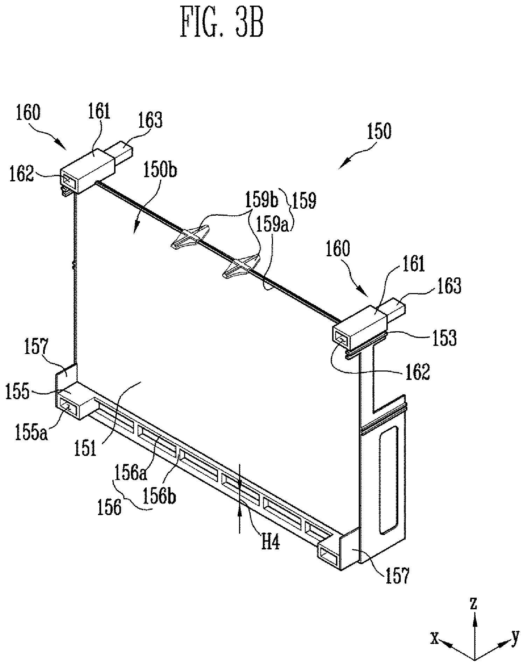

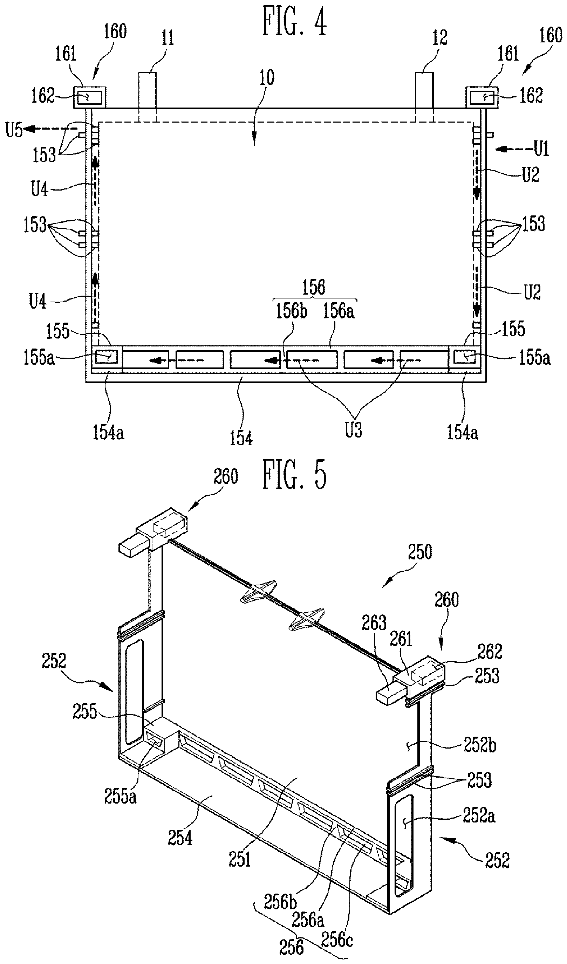

FIG. 3A is a view showing one surface of the barrier of FIG. 2. FIG. 3B is a view showing the other surface of the barrier of FIG. 2. FIG. 4 is a view schematically showing a front side of the barriers having the battery cell interposed therebetween.

Referring to FIGS. 3A to 4, the spacing elements 155 may be provided at the lower portion of the barrier 150. The battery cell 10 is mounted or arranged on the spacing elements 155, and the flow path for the heat exchange medium may be provided between the spacing elements 155 and the battery cell 10. For example, the spacing elements 155 may be formed in the shape of a box having a groove or hole 155a provided therein. Spacing members 154a and guidance plates 157 may be respectively interposed between the spacing elements 155 and the side plate 152 and between the spacing element 155 and the base plate 154. The spacing member 154a can be provided between the spacing elements 155 and the base plate 154 at a bottom of each of the spacing elements 155. The guidance plate 157 is preferably provided between the spacing element 155 and the side plate 152 at a side of the spacing element 155. The spacing member 154a may be provided to an inner surface 150a of the base plate 154, and the guidance member 157 may be provided to the outer surface 150b of the separation plate 151. The spacing member 154a may extend along the base plate 154 from the separation plate 151, and the guidance member 157 may extend along the side plate 152 from the separation plate 151.

For example, in a case where adjacent barriers 150 are provided to correspond to each other, the inner surface 150a of any one barrier 150 (e.g., a first barrier) of the adjacent barriers 150 may face the outer surface 150b of the other barrier 150 (e.g., a second barrier) of the adjacent barriers 150 (see FIG. 2). The first and second barriers 150 refer to barriers 150 having the same shape, but for convenience of illustration, adjacent barriers 150 will be described as the first and second barriers 150. The spacing element 155 that is provided to the outer surface 150b of the second barrier 150 may be mounted on the spacing member 154a provided to the inner surface 150a of the first barrier 150. The guidance plate 157 provided to the outer surface 150b of the second barrier 150 may be provided to come in contact with the side plate 152 of the first barrier 150.

The base plate 154 is provided to the inner surface 150a of the first barrier 150. However, the base plate 154 may hardly protrud from the outer surface 150b of the second barrier 150, or may not be provided to the outer surface 150b of the second barrier 150. In this case, the spacing element 155 provided to the outer surface 150b of the second barrier 150 may be spaced apart from a bottom end of the separation plate 151 at a predetermined distance. The predetermined distance may correspond to the sum of the thickness H1 of the spacing member 154a and the thickness H3 of the base plate 154. The sum of the thickness H2 of a lower first enforcement rib 156a described later and the thickness H1 of the spacing member 154a, on the inner surface 150a of the first barrier 150, may be provided to correspond to the thickness H4 of a lower first enforcement rib 156a provided to the outer surface 150b of the second barrier 150. For example, in a case where the first and second barriers 150 are engaged with each other, the spacing element 155 provided to the outer surface 150b of the second barrier 150 may be mounted on the base plate 154 provided on the inner surface 150a of the first barrier 150. Thus, the spacing elements 155 respectively provided to the first and second barriers 150 may be aligned at positions corresponding to each other. In addition, the holes 155a provided inside the respective support portions 155 may be provided to face each other.

The barrier 150 may further include an enforcement structure arranged between the spacing elements 155 (e.g., the first and second spacing elements 155) respectively provided at lower portions of the separation plate 151. The enforcement structure 156 may include a pair of first enforcement ribs 156a provided in parallel to the base plate 154 to respectively connect the first and second spacing elements 155 provided at upper and lower portions of the first and second spacing elements 155, and a plurality of second enforcement ribs 156b configured to vertically connect the pair of first enforcement ribs 156a. The bottom surface of the battery cell 10 may also be arranged on one of the first enforcement ribs 156a, and the one of the first enforcement ribs 156a can distribute the load of the battery cell 10 otherwise concentrated on the support portions 155. The second enforcement ribs 156b are arranged between the first enforcement ribs 156a, thereby reinforcing the strength of at least the one of the first enforcement ribs 156a.

The first and second enforcement ribs 156a and 156b may be formed to have predetermined thicknesses. For example, the first and second enforcement ribs 156a and 156b may be formed to have the same thickness. As such, the first and second enforcement ribs 156a and 156b are connected to ach other, to be formed in the shape of a ladder with compartments between the enforcement ribs 156a, 156b. The first and second enforcement ribs 156a and 156b may form polygonaly and in particular rectangular or trapezoidal concave space portions.

Referring to the inner surface 150a of the barrier 150, from which the base plate 154 protrudes, a width S2 of the spacing element 155 in a y-direction may be formed thicker than a width S3 of the first enforcement rib 156a in the y-direction, so that the spacing element 155 firmly supports the battery cell 10. On the other hand, the width S2 of the support portion 155 in the y-direction may be formed narrower than the width S1 of the base plate 154 except the first enforcement rib 156a in the y-direction, so that it is possible to increase the area of the flow path for the heat exchange medium that may pass along the bottom surface of the battery cell 10 and the base plate 154. The hole 155a in the spacing element 155 and the base plate 154 provided at the bottom of the spacing element 155 generate a differential pressure of the flowing heat exchange medium and change the path of the heat exchange medium, so that the heat exchange medium is ascended between the battery cell 10 and the side plate 152. Thus, the heat exchange medium passing along the lower portion of the battery cell 10 can be discharged to the outside of the barrier 150.

Referring to FIG. 4, the heat exchange path U1 extends into the barrier 150 through the openings 152a and 152b of the side plate 152 passes through the space between the battery cell 10 and the side plate 152, formed by the spacing rib 153 provided at the side plate 152 (heat exchange path U2). Subsequently, the heat exchange medium performs a heat exchange with the bottom surface of the battery cell 10 while passing through the space at the bottom surface of the battery cell 10, formed by the support portion 155 (heat exchange path U3), and then passes along a side surface of the battery cell 10 (heat exchange path U4). Thus, the heat exchange medium can be discharged to the outside of the barrier 150 by passing through the openings 152a and 152b of the side plate 152.

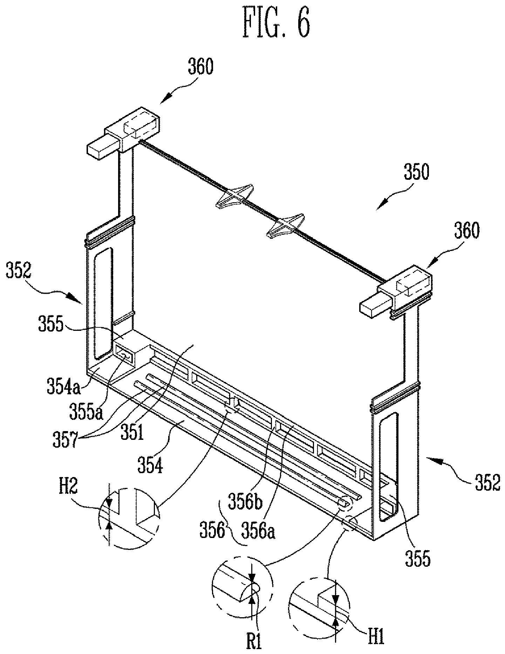

Hereinafter, other embodiments of the present invention will be described with reference to FIGS. 5 and 6. Contents of these embodiments, except the following contents, are similar to those of the embodiment described with reference to FIGS. 1 to 4, and therefore, their detailed descriptions will be omitted.

FIG. 5 is a perspective view of a barrier according to another embodiment of the present invention.

Referring to FIG. 5, a barrier 250 according to this embodiment may have one battery cell provided in the tray formed by the barrier 250 and a space that opens towards the tray and is formed by an adjacent barrier 250. In this case, each barrier 250 is provided with a fastening member 260, so that the barriers 250 can be fastened and fixed to each other through the fastening portions 260. The adjacent barrier 250 and the battery cell are provided to be spaced apart from each other, and the space between the adjacent barrier 250 and the battery cell may act as a flow path of the heat exchange medium.

The barrier 250 may include a separation plate 251 interposed between the two adjacent battery cells, and side plates 252 and a base plate 254 respectively provided at end portions or edges of the separation plate 251 to support side and bottom surfaces of the battery cell. The barrier 250 may be provided so that the configuration provided to one surface of the separation plate 251 is different from that provided to the other surface opposite to the one surface of the separation plate 251. For example, the side plates 252 and the base plate 254 may be provided to and in particular protrude from the one surface of the separation plate 251. On the other hand, the side plates 252 and the base plate 254 may not be provided to and in particular not project from the other surface of the separation plate 251. Each of the side plates 252 may be provided with openings 252a and 252b which are passages through which the heat exchange medium can flow in the barrier 250 or flow out of the barrier 250, and spacing ribs 253 that protrude from a surface of the side plate 252. A body portion 261 of the fastening member 260 may be provided at a portion where a top portion of the side plate 252 and the separation plate 251 meet each other. A fastening receptacle 262 and a fastening protrusion 263 may be respectively provided at one end and the other end of the body portion 261 of the fastening member 260.

Spacing elements 255 configured to support the battery cell may be provided beneath the separation plate 251, e.g. at the lower edge of the separation plate 251 and extending in or against a stacking direction, in which the barrier 250 can be attached to each other. The spacing elements 255 may be respectively provided at one side and the other side of the separation plate 251. The spacing elements 255 respectively provided at the one side and the other side of the separation plate 251 may be interconnected by an enforcement structure 256. An upper first enforcement rib 256a of the enforcement structure 256 is provided to interconnect upper portions of the spacing elements 255, and a lower first enforcement rib 256c of enforcement structure 256 is provided to interconnect lower portions of the spacing elements 255. Thus, the first enforcement ribs 256a and 256c can support, together with the support portions 255, the bottom surface of the battery cell 10.

The pair of first enforcement ribs 256a and 256c provided in parallel to each other may be interconnected by a plurality of second enforcement ribs 256b provided vertically, i.e. perpendicular to the first enforcement ribs 256a and 256c. For example, the thickness of the first enforcement ribs 256a and 256c may be formed constant without any change in thickness, and the second enforcement ribs 256b may be formed to have a continuously changing thickness. That is, the thickness of the second enforcement rib 256b may gradually decrease as the second enforcement rib 256b reaches from the lower first enforcement rib 256c to the upper first enforcement rib 256a. Thus, the first and second enforcement ribs 256a, 256b and 256c protrude from the base plate 251, to form trapezoidal space portions or compartments inside the enforcement structure 256. The spacing element 255 is formed in the shape of a quadrangular box having a groove, opening or hole 255a therein. In this case, the groove, opening or hole 255a may be formed with a trapezoidal shape. The spacing element 255 and the enforcement structure 256 can support the load of the battery cell. In this case, the lower portion of the spacing element 255 and the lower portion of the second enforcement rib 256b are formed thicker than upper portions, so that it is possible to improve the strength of the spacing element 255 and the enforcement structure 256. Accordingly, the load of the battery cell can be more efficiently supported.

FIG. 6 is a perspective view of a barrier according to still another embodiment of the present invention.

Referring to FIG. 6, a barrier 350 according to this embodiment may be interposed between adjacent battery cells in the battery module. The barrier 350 may include a separation plate 351 provided to face a wide surface of the battery cell, and side plate 352 and a base plate 354, provided to face narrow surfaces (side and bottom surfaces) of the battery cell at each edge or corner of the separation plate 351.

The base plate 354 may include two spacing elements 355 configured to support the battery cell, and an enforcement structure 356 configured to connect the two spacing elements 355 to each other. Each of the spacing elements 355 may be formed in the shape of a box having a groove, opening or hole 355a therein. The enforcement structure 356 may include a pair of first enforcement ribs 356a provided in parallel to connect the two spacing elements 255 to each other, and second enforcement ribs 356b configured to interconnect the pair of first enforcement ribs 356a to each other. The base plate 354 may be further provided with a spacing member 354a on which the spacign element 355 is mounted.

The barrier 350 may be provided with one or more guide bars 357 provided to the base plate 354 so as to guide the flow of a heat exchange medium. Each of the guide bars 357 protrudes toward the bottom surface of the battery cell on the base plate 354. In this case, the guide bar 357 may extend along the length direction of the base plate 354. The guide bar 354 may be provided so that the corner of the guide bar 354 is rounded. The cross-section of the guide bar 354 in a direction vertical or perpendicular to the extending direction of the guide bar 354 may be formed in a semicircular shape. A height R1 of the guide bar 354 may be formed equal to or smaller than a thickness H2 of a lower first enforcement rib 356a of the first enforcement ribs 356a or the thickness H1 of the spacing element 354a.

A flow path of the heat exchange medium after is has exchanged heat with the battery cell may be provided in the barrier 350 according to this embodiment. For example, the flow path of the heat exchange medium may also be provided between the base plate 354 and the bottom surface of the battery cell. In this case, the guide bar 357 is provided on the base plate 354, so that the flow of the heat exchange medium can be guided, to thereby improve the heat exchange efficiency between the heat exchange medium and the battery cell. Since the height R1 of the guide bar 357 is provided to correspond to the thickness H2 of the lower first enforcement rib 356a provided to the base plate 354 or the thickness H1 of the spacing member 354a, the guide bar 357 guides only the flow of the heat exchange medium but does not interfere with the flow of the heat exchange medium in the width direction of the base plate 354, i.e. perpendicular to the separation plate 351.

In some instances, as would be apparent to one of ordinary skill in the art, features, characteristics, and/or elements described in connection with a particular embodiment may be used singly or in combination with features, characteristics, and/or elements described in connection with other embodiments unless otherwise specifically indicated.

## Claims

1. Barrier (150) for separating two adjacent battery cells (10) of a battery module (100) from each other, the barrier (150) comprising a separation plate (151), at least one side plate (152) and a base plate (154), the side plate (152) and the base plate (154) being based on adjacent edges of the separation plate (151), thereby defining a tray for receiving a battery cell (10), a spacing element (155) that protrudes from the base plate (154) into the tray, wherein the spacing element (155) protrudes from the base plate (154) in a direction (z) perpendicular to the base plate (154) and the side plate (152) is formed with an opening (152a), **characterised in that** a height of the spacing element (155) in the direction (z) perpendicular to the base plate (154) is greater than a distance between the opening (152a) and the base plate (154).

2. Barrier (150) according to claim 1, **characterized in that** a groove (155a) extends into the spacing element (155).

3. Barrier (150) according to claim 1 or 2, **characterized in that** the spacing element (155) extends beyond a side (150b) of the separation plate (151) opposite of the tray, wherein a guidance plate (157) is provided that extends parallel to and abuts the side plate (152) and the spacing element (155), the guidance plate (157) surmounting the spacing element (155) away from the base plate (154).

4. Barrier (150) according to any of claims 1 to 3, **characterized in that** the side plate (152) comprises a first and a second section, the first section extending further from the separation plate (151) than the second section, wherein the first section is arranged between the second section and the base plate (154).

5. Barrier (150) according to any of claims 1 to 4, **characterized in that** the side plate (152) is formed with an inner side that faces the tray and an outer side that faces away from the tray, wherein at least one spacing rib (153) is arranged on the inner side and/or on the outer side.

6. Barrier (150) according to any of claims 1 to 5, **characterized in that** two side plates (152) and two spacing elements (155) are provided, wherein the side plates (152) are arranged at opposite edges of the separation plate (151) and each of the spacing elements (155) is arranged adjacent to one of the side plates (152).

7. Barrier (150) according to any of claims 1 to 6, **characterized in that** the separation plate (151) comprises an edge section that abuts the base plate (154), the edge section comprising enforcement ribs (156a, 156b).

8. Barrier (350) according to any of claims 1 to 7, **characterized in that** at least one guidance rib (357) protrudes from the base plate (154) into the tray.

9. Barrier (150) according to any of claims 1 to 8, **characterized by** a fastening member (160) that is adapted to captively fix the barrier (150) to another barrier (150) by a force fit.

10. Barrier (150) according to claim 9, **characterized in that** the fastening member (160) comprises a fastening receptacle (162) and a fastening protrusion (163), wherein the fastening receptacle (162) opens against and the fastening protrusion (163) extends in a mounting direction, in which the barrier (150) can be mounted to another barrier (150), the fastening receptacle (162) being adapted to at least sectionwise receive the fastening protrusion (163) of the other barrier (150) in a force fit manner.

11. Barrier (150) according to any of claims 1 to 10, **characterized in that** the barrier (150) comprises at least one retaining lug (159a) that protrudes from an edge of and perpendicular to the separation plate (151), the edge being opposite of the base plate (154).

12. Battery module (100) with a plurality of battery cells (10) arranged one behind the other in a stacking direction, the battery module (100) comprising a barrier (150) that is positioned between two adjacent battery cells (10) of the plurality of battery cells (10), **characterized in that** the barrier (150) is a barrier (150) according to any of claims 1 to 11.

13. Battery module (100) according to claim 12, **characterized in that** the battery cell (10) is arranged in the tray and rests against the two spacing elements (155), wherein three heat exchange paths (U2, U3, U4) are defined between the battery cell (10) and the barrier (150), the three heat exchange paths (U2, U3, U4) being interconnected in the area or the spacing elements (155).

## Patentansprüche

1. Barriere (150) zum Trennen von zwei benachbarten Batteriezellen (10) eines Batteriemoduls (100) voneinander, wobei die Barriere (150) eine Trennungsplatte (151), zumindest eine Seitenplatte (152) und eine Basisplatte (154) aufweist, wobei die Seitenplatte (152) und die Basisplatte (154) auf benachbarten Rändern der Trennungsplatte (151) ruhen, wodurch sie ein Fach zum Aufnehmen einer Batteriezelle (10) definieren, sowie ein Abstandselement (155), das von der Basisplatte (154) in das Fach hinein ragt, wobei das Abstandselement (155) von der Basisplatte (154) in eine Richtung (z) perpendikulär zur Basisplatte (154) vorsteht und die Seitenplatte (152) mit einer Öffnung (152a) ausgebildet ist, **dadurch gekennzeichnet, dass** eine Höhe des Abstandselements (155) in der Richtung (z) perpendikulär zur Basisplatte (154) größer als ein Abstand zwischen der Öffnung (152a) und der Basisplatte (154) ist.

2. Barriere (150) nach Anspruch 1, **dadurch gekennzeichnet, dass** sich eine Nut (155a) in das Abstandselement (155) hinein erstreckt.

3. Barriere (150) nach Anspruch 1 oder 2, **dadurch gekennzeichnet, dass** sich das Abstandselement (155) über eine Seite (150b) der Trennungsplatte (151), die dem Fach gegenüberliegt, hinaus erstreckt, wobei eine Führungsplatte (157) bereitgestellt wird, die sich parallel zur Seitenplatte (152) und dem Abstandselement (155) erstreckt und an diesen anliegt, wobei die Führungsplatte (157) das Abstandselement (155) von der Basisplatte (154) weg überragt.

4. Barriere (150) nach einem der Ansprüche 1 bis 3, **dadurch gekennzeichnet, dass** die Seitenplatte (152) einen ersten und einen zweiten Abschnitt aufweist, wobei sich der erste Abschnitt weiter von der Trennungsplatte (151) als der zweite Abschnitt erstreckt, wobei der erste Abschnitt zwischen dem zweiten Abschnitt und der Basisplatte (154) angeordnet ist.

5. Barriere (150) nach einem der Ansprüche 1 bis 4, **dadurch gekennzeichnet, dass** die Seitenplatte (152) mit einer Innenseite, die dem Fach zugewandt ist, und einer Außenseite, die vom Fach abgewandt ist, ausgebildet ist, wobei zumindest eine Abstandsrippe (153) auf der Innenseite und/oder der Außenseite angeordnet ist.

6. Barriere (150) nach einem der Ansprüche 1 bis 5, **dadurch gekennzeichnet, dass** zwei Seitenplatten (152) und zwei Abstandselemente (155) bereitgestellt werden, wobei die Seitenplatten (152) an gegenüberliegenden Rändern der Trennungsplatte (151) angeordnet sind und jedes der Abstandselemente (155) benachbart zu einer der Seitenplatten (152) angeordnet ist.

7. Barriere (150) nach einem der Ansprüche 1 bis 6, **dadurch gekennzeichnet, dass** die Trennungsplatte (151) einen Randabschnitt, der an der Basisplatte (154) anliegt, aufweist, wobei der Randabschnitt Verstärkungsrippen (156a, 156b) aufweist.

8. Barriere (350) nach einem der Ansprüche 1 bis 7, **dadurch gekennzeichnet, dass** zumindest eine Führungsrippe (357) von der Basisplatte (154) in das Fach hinein ragt.

9. Barriere (150) nach einem der Ansprüche 1 bis 8, **gekennzeichnet durch** ein Befestigungselement (160), das angepasst ist, um die Barriere (150) durch einen Kraftschluss unverlierbar an einer weiteren Barriere (150) zu befestigen.

10. Barriere (150) nach Anspruch 9, **dadurch gekennzeichnet, dass** das Befestigungselement (160) eine Befestigungsaufnahme (162) und einen Befestigungsvorsprung (163) aufweist, wobei sich die Befestigungsaufnahme (162) gegen eine Montagerichtung öffnet und sich der Befestigungsvorsprung (163) in eine Montagerichtung erstreckt, wobei die Barriere (150) an einer weiteren Barriere (150) angebracht sein kann, wobei die Befestigungsaufnahme (162) angepasst ist, um zumindest abschnittweise den Befestigungsvorsprung (163) der weiteren Barriere (150) kraftschlüssig aufzunehmen.

11. Barriere (150) nach einem der Ansprüche 1 bis 10, **dadurch gekennzeichnet, dass** die Barriere (150) zumindest eine Haltelasche (159a), die von einem Rand der und perpendikulär zur Trennungsplatte (151) vorsteht, aufweist, wobei der Rand der Basisplatte (154) gegenüberliegt.

12. Batteriemodul (100) mit einer Vielzahl von Batteriezellen (10), die hintereinander in einer Stapelrichtung angeordnet sind, wobei das Batteriemodul (100) eine Barriere (150), die zwischen zwei benachbarten Batteriezellen (10) der Vielzahl der Batteriezellen (10) positioniert ist, aufweist, **dadurch gekennzeichnet, dass** die Barriere (150) eine Barriere (150) nach einem der Ansprüche 1 bis 11 ist.

13. Batteriemodul (100) nach Anspruch 12, **dadurch gekennzeichnet, dass** die Batteriezelle (10) im Fach angeordnet ist und an den zwei Abstandselementen (155) anliegt, wobei drei Wärmeaustauschpfade (U2, U3, U4) zwischen der Batteriezelle (10) und der Barriere (150) definiert sind, wobei die drei Wärmeaustauschpfade (U2, U3, U4) im Bereich der Abstandselemente (155) miteinander verbunden sind.

## Revendications

1. Barrière (150) pour séparer l'un de l'autre deux éléments de batterie adjacents (10) d'un module de batterie (100), la barrière (150) comprenant une plaque de séparation (151), au moins une plaque latérale (152) et une plaque de base (154), la plaque latérale (152) et la plaque de base (154) étant basées sur des bords adjacents de la plaque de séparation (151), de façon à définir ainsi un plateau pour recevoir une élément de batterie (10), un élément d'espacement (155) qui fait saillie à partir de la plaque de base (154) dans le plateau, l'élément d'espacement (155) faisant saillie à partir de la plaque de base (154) dans une direction (z) perpendiculaire à la plaque de base (154) et la plaque latérale (152) étant formée avec une ouverture (152a), **caractérisée en ce qu'**une hauteur de l'élément d'espacement (155) dans la direction (z) perpendiculaire à la plaque de base (154) est supérieure à une distance entre l'ouverture (152a) et la plaque de base (154) .

2. Barrière (150) selon la revendication 1, **caractérisée en ce qu'**une rainure (155a) s'étend dans l'élément d'espacement (155).

3. Barrière (150) selon la revendication 1 ou 2, **caractérisée en ce que** l'élément d'espacement (155) s'étend au-delà d'un côté (150b) de la plaque de séparation (151) à l'opposé du plateau, dans laquelle une plaque de guidage (157) est disposée laquelle s'étend parallèlement à, et bute contre, la plaque latérale (152) et l'élément d'espacement (155), la plaque de guidage (157) surmontant l'élément d'espacement (155) de façon à être éloignée de la plaque de base (154).

4. Barrière (150) selon l'une quelconque des revendications 1 à 3, **caractérisée en ce que** la plaque latérale (152) comprend une première et une deuxième sections, la première section s'étendant plus loin à partir de la plaque de séparation (151) que la deuxième section, la première section étant disposée entre la deuxième section et la plaque de base (154).

5. Barrière (150) selon l'une quelconque des revendications 1 à 4, **caractérisée en ce que** la plaque latérale (152) est formée avec un côté intérieur qui fait face au plateau et un côté extérieur qui est dirigé de façon à s'éloigner du plateau, au moins une nervure d'espacement (153) étant disposée sur le côté intérieur et/ou sur le côté extérieur.

6. Barrière (150) selon l'une quelconque des revendications 1 à 5, **caractérisée en ce que** deux plaques latérales (152) et deux éléments d'espacement (155) sont disposés, les plaques latérales (152) étant disposées à des bords opposés de la plaque de séparation (151) et chacun des éléments d'espacement (151) étant disposé au voisinage de l'une des plaques latérales (152).

7. Barrière (150) selon l'une quelconque des revendications 1 à 6, **caractérisée en ce que** la plaque de séparation (151) comprend une section de bord qui bute sur la plaque de base (154), la section de bord comprenant des nervures de renfort (156a, 156b).

8. Barrière (350) selon l'une quelconque des revendications 1 à 7, **caractérisée en ce qu'**au moins une nervure de guidage (357) fait saillie à partir de la plaque de base (154) dans le plateau.

9. Barrière (150) selon l'une quelconque des revendications 1 à 8, **caractérisée par** un élément de fixation (160) qui est conçu pour fixer de façon captive la barrière (150) à une autre barrière (150) par une adaptation en force.

10. Barrière (150) selon la revendication 9, **caractérisée en ce que** l'élément de fixation (160) comprend un réceptacle de fixation (162) et une saillie de fixation (163), le réceptacle de fixation (162) s'ouvrant de façon contraire à une et la saillie de fixation (163) s'étendant dans la direction de montage, dans laquelle la barrière (150) peut être montée sur une autre barrière (150), le réceptacle de fixation (162) étant conçu pour recevoir au moins par sections la saillie de fixation (163) de l'autre barrière (150) selon un mode d'adaptation en force.

11. Barrière (150) selon l'une quelconque des revendications 1 à 10, **caractérisée en ce que** la barrière (150) comprend au moins un étrier de maintien (159a) qui fait saillie à partir d'un bord de la plaque de séparation (151) et qui est perpendiculaire à celle-ci, le bord étant à l'opposé de la plaque de base (154).

12. Module de batterie (100) avec une pluralité d'éléments de batterie (10) disposés les uns derrière les autres dans une direction d'empilement, le module de batterie (100) comprenant une barrière (150) qui est positionnée entre deux éléments de batterie adjacents (10) de la pluralité d'éléments de batterie, **caractérisé en ce que** la barrière (150) est une barrière (150) selon l'une quelconque des revendications 1 à 11.

13. Module de batterie (100) selon la revendication 12, **caractérisé en ce que** l'élément de batterie (10) est disposé dans le plateau et repose contre les deux éléments d'espacement (155), dans lequel trois trajets d'échange de chaleur (U2, U3, U4) sont définis entre l'élément de batterie (10) et la barrière (150), les trois trajets d'échange de chaleur (U2, U3, U4) étant interconnectés dans la zone ou les éléments d'espacement (155).
